# EUROPEAN PATENT APPLICATION

(11) **EP 4 804 313 A1**
(43) Date of publication of application: **09.09.2026**
(21) Application number: 25854564.9
(22) Date of filing: 29.07.2025
(51) Int. Cl.: H01M 50/242, H01M 10/6554, H01M 10/6556, H01M 10/613, H01M 50/375, H01M 10/625, B60L 50/64

(54) **BATTERY PACK AND DEVICE INCLUDING SAME**

(30) Priority: 13.08.2024 KR 20240108200
(71) Applicant: LG Energy Solution, Ltd., Seoul 07335 (KR)
(72) Inventor: KIM, Kyungwoo, Daejeon 34122 (KR); YUN, Hyeonki, Daejeon 34122 (KR); JUNG, Seyun, Daejeon 34122 (KR); LEE, Inje, Daejeon 34122 (KR); BAEK, Yunseon, Daejeon 34122 (KR); PARK, Jonghee, Daejeon 34122 (KR)
(74) Representative: Plasseraud IP
(86) International application number: PCT/KR2025/011211
(87) International publication number: WO 2026/038755

(57) **Abstract**

A battery pack according to an embodiment includes: a plurality of battery cell laminates each of which includes a plurality of battery cells; a lower plate on which the plurality of battery cell laminates are arranged; and a plurality of heat dissipation pads arranged between the respective battery cell laminates and the lower plate, and contacting the battery cell laminates, wherein the lower plate includes a plurality of vacuum adsorbing holes arranged corresponding to the respective heat dissipation pads, and a vacuum device combined to the plurality of vacuum adsorbing holes, and adsorbing the heat dissipation pad on the lower plate by removing air between the lower plate and the heat dissipation pad.

## Description

### Technical Field

### Cross-references to Related Applications

This application claims priority to and the benefit of Korean Patent Application No. 10-2024-0108200 filed with the Korean Intellectual Property Office on August 13, 2024, the entire contents of which are incorporated herein by reference.

The present disclosure relates to a battery pack and a device including the same, and more particularly, the present disclosure relates to a battery pack for increasing use rates of a space, having a simple structure, and providing easy detachment, and a device including the same.

### Description of the Related Art

Rechargeable batteries are receiving a lot of attention as an energy source in various product groups such as mobile devices and electric vehicles. The rechargeable batteries are a powerful energy resource that may replace the use of conventional products using fossil fuels.

Recently, as the need for a large capacity rechargeable battery structure, including the use of rechargeable batteries as an energy storage source, increases, the demand for a battery pack with a multi-module structure which consists of battery modules in which rechargeable batteries are connected in series/in parallel is increasing.

On the other hand, when a battery pack is formed by connecting battery cells in series/in parallel, a method that forms the pack by forming a battery module including at least one battery cell and adding other constituent elements using the at least one battery module to add other constituent elements to the battery is generally used.

However, when configuring the battery pack using the battery module, there is a problem in that the overall manufacturing process becomes complicated because a two-step assembly process is required: manufacturing the battery cell into a battery module unit, and then assembling the battery modules manufactured into the battery module unit back into the battery pack.

That is, the typical battery pack is made by configuring battery cells to create battery modules, and connecting the battery modules to manufacture a battery pack. The battery cells are manufactured, and the battery modules are manufactured by a separate manufacturing company or separate assembly lines, and then they are assembled into the battery pack. The battery module also has its own individual case for its own insulation and safety, which takes up a space and increases a weight.

For this reason, recently, to maximize the efficiency in assembly process and the energy, a cell to pack (CTP) for assembling the simplified battery modules with partially exposed battery cells or the battery cells directly on the battery pack is applied. In this CTP structure, the battery cell is directly mounted to the lower plate (or heat sink, cooling plate, venting plate, etc.) of the battery pack, and since it is difficult to mechanically engage the battery cell directly, a thermal resin is used for heat conduction and adhesive purposes to secure the battery cell and quickly transfer heat. For example, the battery cell is attached to the lower plate using a urethane-series thermal resin. According to this, the surface area of the lower plate in contact with the battery cell increases due to complete adhesion, thereby increasing the thermal efficiency and making it possible to firmly support the battery cell. However, since the battery cell is attached to the lower plate with strong adhesive strength, it is very difficult to separate the battery cell from the lower plate. Since thermal resin hardens after bonding, it is substantially impossible to disassemble and reuse the battery cell (particularly pouch-type battery cell) intact. Therefore, the CTP structure for effectively conducting heat and fixing the battery cells while being detachable without damaging the battery cells is required.

### SUMMARY OF THE INVENTION

### Technical Problem

The present disclosure attempts to provide a battery pack for strongly fixing the battery pack, while being reusable by separating it when reuse is necessary, in a structure applying a battery cell to the battery pack, and a device including the same.

Objectives of the present disclosure are not limited to the objectives mentioned above, and other technical objectives that are not mentioned may be clearly understood to a person of an ordinary skill in the art using the following description.

### Technical Solution

An embodiment of the present disclosure provides a battery pack including: a plurality of battery cell laminates each of which includes a plurality of battery cells; a lower plate on which the plurality of battery cell laminates are arranged; and a plurality of heat dissipation pads arranged between the respective battery cell laminates and the lower plate, and contacting the battery cell laminates, wherein the lower plate includes a plurality of vacuum adsorbing holes arranged corresponding to the respective heat dissipation pads, and a vacuum device combined to the plurality of vacuum adsorbing holes, and adsorbing the heat dissipation pad on the lower plate by removing air between the lower plate and the heat dissipation pad.

The heat dissipation pad may be a thermal conductivity pad.

When the battery cell laminate is arranged, a portion of the heat dissipation pad contacting the battery cell laminate may be deformed correspondingly to a shape of the battery cell laminate.

The battery cell laminate may be fixed to the lower plate by means of the heat dissipation pad being adsorbed onto the lower plate by the vacuum device.

The battery cell laminate may be separated from the lower plate by releasing a vacuum adsorption state of the vacuum device.

The vacuum device may include an adsorption portion inserted into the vacuum adsorbing hole and inhaling air in the vacuum adsorbing hole, and a lever portion for controlling opening/closing of the adsorption portion.

The lower plate may be a cooling plate in which a cooling path is formed.

The lower plate may be a venting plate in which a venting path is formed.

The heat dissipation pad may have adhesiveness.

Another embodiment of the present disclosure provides a device including the battery pack.

### Advantageous Effects

The battery pack and the device including the same according to the embodiment may strongly fix the battery pack, may separate the battery cell without damages, and may reuse the same in the structure of applying the battery cell to the battery pack.

The effects of the present disclosure are not limited to the effects mentioned above, and other effects not mentioned can be clearly understood by those skilled in the art from the description of the claims.

### BRIEF DESCRIPTION OF THE DRAWINGS

FIG. 1 is an exploded perspective view showing a battery pack according to an embodiment of the present disclosure.
FIG. 2 is a view showing the assembled state of a battery pack according to an embodiment of the present disclosure .
FIG. 3 is an enlarged view of portion A in FIG. 2.
FIG. 4 is a partial cross-sectional view showing a lower plate at a portion B-B' in FIG. 3.
FIG. 5 is a view showing a state of a lower plate and a heat dissipation pad before a battery cell laminate is arranged in FIG. 4.
FIG. 6 is a view showing a state of a lower plate and a heat dissipation pad before vacuum adsorption is performed after a battery cell laminate is arranged in FIG. 4.

### DETAILED DESCRIPTION OF THE EMBODIMENTS

Embodiments described below are illustrated for understanding of the disclosure, and it should be understood that the present disclosure may be modified in various ways to be different from the embodiments described herein. However, in the description of the present disclosure, the detailed description and illustration of related well-known functions or constituent elements will be omitted when it is determined as unnecessarily making the scope of the present disclosure unclear. The terms "first", "second", etc. used in the present specification may be used to describe various constituent elements, but the constituent elements should not be limited to the terms.

The terms "first", "second", etc. used in the present specification may be used to describe various constituent elements, but the constituent elements should not be limited to the terms. The terms should be used only for differentiating one constituent element from another constituent element.

The terms used in the specification are used to describe only specific embodiments and are not intended to limit the scope of the present invention. Singular forms are intended to include plural forms unless the context clearly indicates otherwise. In the present specification, it should be understood that the term "include", "comprise", "have", or "configure" indicates that a feature, a number, a step, an operation, a component, a part, or a combination thereof described in the specification is present, but does not exclude a possibility of presence or addition of one or more other features, numbers, steps, operations, components, parts, or combinations, in advance.

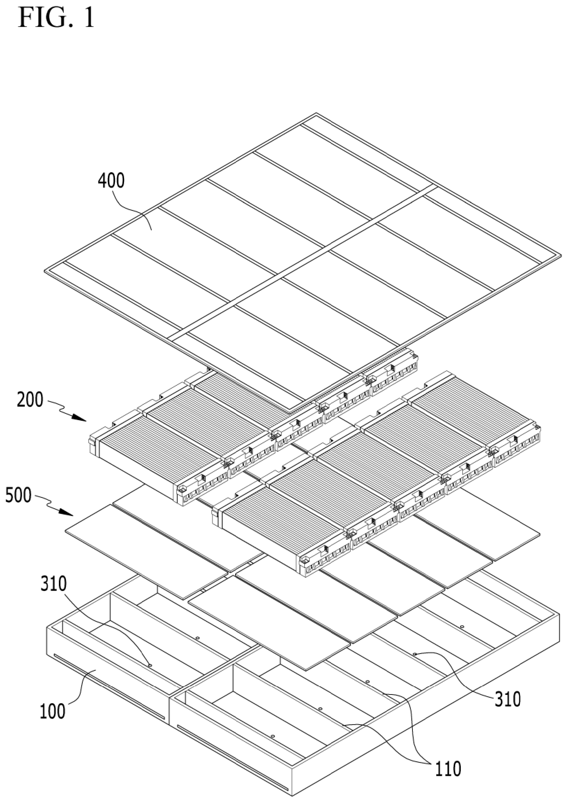

A configuration of a battery pack according to an embodiment will now be described with reference to FIG. 1 to FIG. 4.

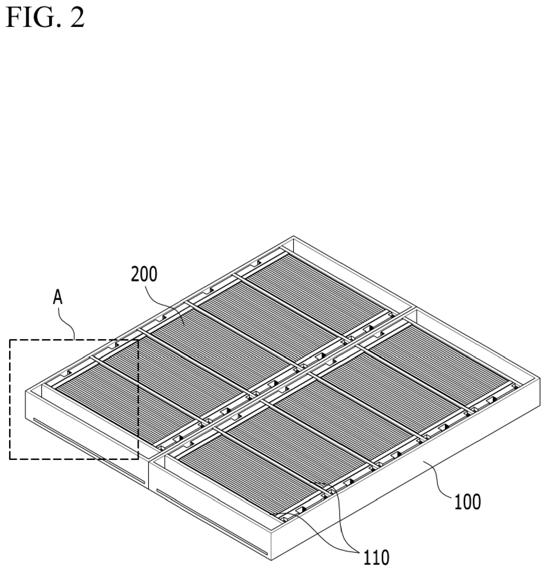

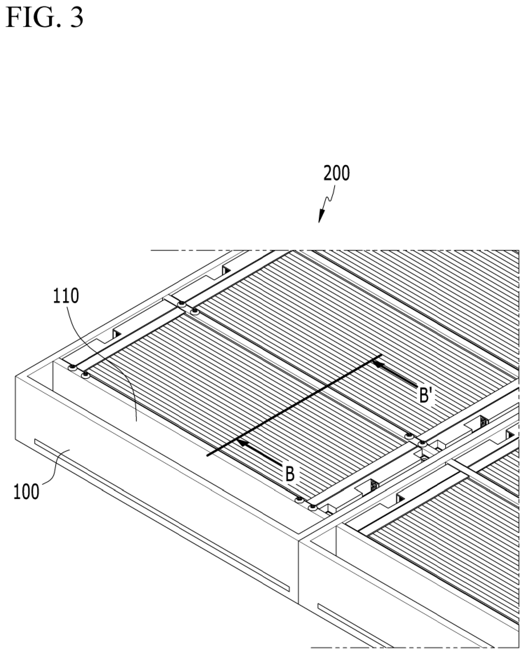

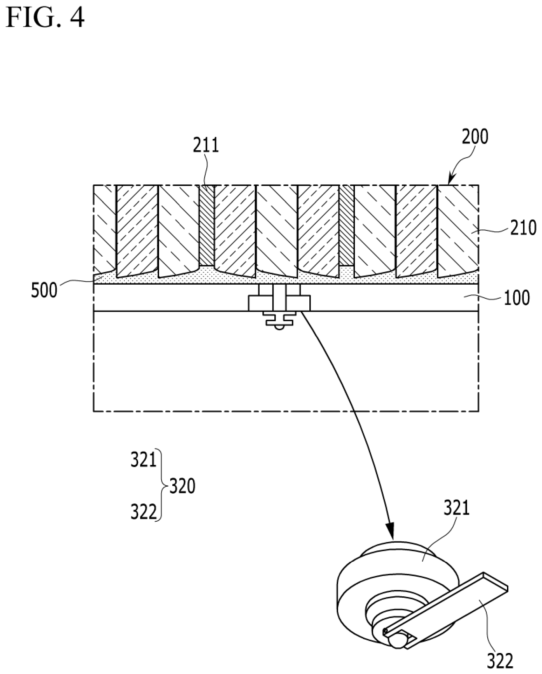

FIG. 1 is an exploded perspective view showing a battery pack according to an embodiment of the present disclosure. FIG. 2 is a view showing the assembled state of a battery pack according to an embodiment of the present disclosure . FIG. 3 is an enlarged view of portion A in FIG. 2. FIG. 4 is a partial cross-sectional view showing a lower plate at a portion B-B' in FIG. 3.

Referring to FIG. 1 to FIG. 4, the battery pack includes a lower plate 100 having module regions, a cell barrier 110 for partitioning the module regions, and a battery cell laminate 200 arranged in the module regions.

The lower plate 100 receives the battery cell laminates 200. The module regions of the lower plate 100 may be formed to have a size corresponding to the size of the battery cell laminate 200, and the battery cell laminates 200 may be disposed in the respective module regions. According to the present embodiment, the battery cell laminates 200 may be arranged in two rows along the stacking direction of the battery cells, but are not limited thereto, and may be arranged in an appropriate number as needed. In the present embodiment, the lower plate 100 is illustrated as a plate shape, but the lower plate 100 may be a cooling plate with a cooling path arranged therein, or may be a venting plate with a venting path arranged therein. It may be a structure in which cooling and venting paths are arranged together, and various structures may be applied to the battery pack.

At least one vacuum adsorbing hole 310 is formed in the lower plate 100 corresponding to the respective module regions. The vacuum adsorbing hole 310 may, as shown in FIG. 1, be formed in one module region, or may be formed in multiples to improve vacuum adsorption performance without being limited thereto. When a venting path or a cooling path is formed inside the lower plate 100, it may be placed in a position avoiding the same. As will be described below, a vacuum device 320 may be mounted in the vacuum adsorbing hole 310 to inhale air between the lower plate 100 and the heat dissipation pad 500 and fix the heat dissipation pad 500 to the lower plate 100 by adsorption. This will be described in detail later.

The cell barrier 110 may be formed between the respective module regions, allowing partitioning between the respective module regions. The cell barrier 110 may be formed to face the sides of the battery cell laminate 200 disposed in the module region. The lower plate 100 and the cell barrier 110 formed thereon may protect the battery cell laminates 200 from external impacts. However, it is not limited to this, and the lower plate 100 may be in the form of a flat plate without the cell barrier 110, and is not particularly limited.

The heat dissipation pad 500 may be arranged on a bottom surface of the lower plate 100. The heat dissipation pad 500 may transfer heat generated by the battery cell laminates 200 arranged in the respective module regions to the outside of the battery pack. The heat dissipation pad 500 may be made of a resin having thermal conductivity. It may be individually separated and disposed in the respective module regions. The heat transferred to the heat dissipation pad 500 may be discharged to the outside through the lower plate 100. The heat dissipation pad 500 may be a silicone pad with adhesiveness. The heat dissipation pad 500 may be disposed in the module region, and may not have strong adherence, unlike a heat dissipation resin layer formed by applying a conventional thermal resin and curing the same. For this reason, as to be described later, easy separation is possible when reuse of the battery cell is required. This will be described in detail later.

According to the present embodiment, it may further include an upper pack housing 400 covering the upper portion of the battery cell laminate 200. The upper pack housing 400 may be combined with the lower plate 100 and the cell barrier 110 formed on the lower plate 100. The upper pack housing 400 may fix the battery cell laminates 200 in the vertical direction and may protect the battery cell laminates from external forces.

The battery pack, as shown in FIG. 1, includes the battery cell laminate 200, and is formed as a module-less structure in which the battery cell laminate 200, from which the module frame has been removed, is directly combined to the lower plate 100 to form the battery pack, thereby forming a simply-configured battery pack structure in which a cell block including the battery cell laminate and a battery pack housing structure are directly connected without the need to manufacture a separate battery module as in the prior art. This may simplify the overall battery pack manufacturing process, may reduce the production cost of the battery pack, and may reduce the weight of the battery pack. Compared to the drawback of conventional battery modules, which are difficult to reassemble in case of defects because the module frame is welded together, the battery pack according to the present embodiment has an advantage in that it is easy to reassemble during the battery pack assembly process. Regarding the battery pack according to the present embodiment, the battery cell laminate 200 is not fixed in an inseparable manner by a thermal resin layer, but is fixed in a separable manner by adsorption of the heat dissipation pad 500, so there is an advantage in that it may be reused through separation when necessary.

Referring to FIG. 3 and FIG. 4, the battery cell laminate 200 may include battery cells 210 and pads 211 disposed between the battery cells 210.

The battery cell 210 may be a rechargeable battery, and may be configured as a pouch-type rechargeable battery, but is not limited thereto. The battery cells 210 may be configured in a plurality, and the battery cells 210 may be stacked on each other so as to be electrically connected to each other and form the battery cell laminate 200. The battery cells may respectively include an electrode assembly, a battery case, and electrode leads protruding from the electrode assembly.

The pad 211 may be arranged between the battery cells 210 to enhance safety and control expansion of the battery cells 210. For example, it may be a flame-retardant control pad with nonflammability or an expansion control pad with elasticity, but is not limited. It may be configured as a cover partitioning a predetermined number of battery cell 210 into a plurality of units to form a cell block unit during assembly and manufacturing. The battery cell laminate 200 may further include a holding band or an insulating cover formed to surround the battery cell laminate 200, and is not limited thereto.

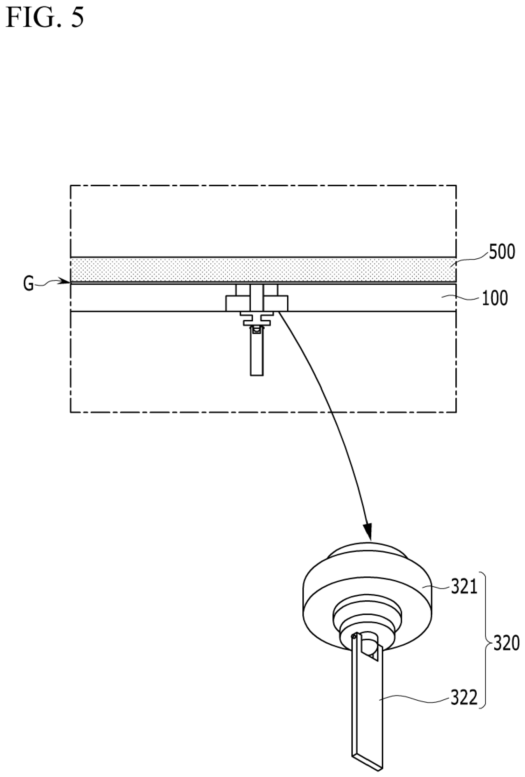

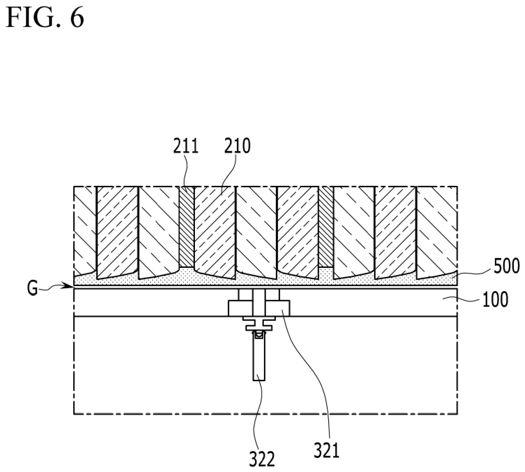

A battery pack including a heat dissipation pad according to an embodiment will now be described in more detail with reference to FIG. 5 and FIG. 6.

FIG. 5 a view showing a state of a lower plate and a heat dissipation pad before a battery cell laminate is arranged in FIG. 4. FIG. 6 a view showing a state of a lower plate and a heat dissipation pad before vacuum adsorption is performed after a battery cell laminate is arranged in FIG. 4.

Referring to FIG. 5, a flat heat dissipation pad 500 is disposed on the lower plate 100 before the battery cell laminate 200 is disposed. When the heat dissipation pad 500 is disposed on the lower plate 100, a gap G exists between the heat dissipation pad 500 and the lower plate 100, unlike the case of applying a liquefied thermal resin.

Thereafter, as shown in FIG. 6, the battery cell laminate 200 is disposed on the heat dissipation pad 500. The heat dissipation pad 500 may be a silicone pad with adhesiveness, and hence, when the battery cell laminate 200 is disposed on the heat dissipation pad 500, as shown in FIG. 6, the upper surface of the heat dissipation pad 500 may be deformed according to the shape of the battery cell laminate 200. That is, the lower surface of the battery cell laminate 200 is placed so that it is slightly submerged while pressing against the heat dissipation pad 500. Therefore, before vacuum adsorption is performed, the battery cell laminate 200 does not move or shift due to the adhesiveness of the heat dissipation pad 500, making it easy to perform the assembly process.

The vacuum device 320 may be installed in the vacuum adsorbing hole 310 formed in the lower plate 100. The vacuum device 320 may include an adsorption portion 321 inserted into the vacuum adsorbing hole 310 and a lever portion 322 controlling the opening and closing of the adsorption portion 321. It is found in FIG. 5 and FIG. 6 seen that vacuum adsorption is not yet performed and the lever portion 322 is opened. In this state, the battery cell laminate 200 may not be completely fixed and may be separated from the heat dissipation pad 500. The vacuum device 320 including an adsorption portion 321 and a lever portion 322 has been used, but the present disclosure is not limited thereto, and various structures for achieving vacuum adsorption may be applied, and for example, a vacuum device for inhaling by directly inserting a nozzle into the vacuum adsorbing hole 310 may be used, and is not limited thereto.

As shown in FIG. 4, by locking the lever portion 322 of the vacuum device 320, air between the heat dissipation pad 500 and the lower plate 100 may be inhaled to achieve vacuum adsorption, thereby eliminating the gap G between the heat dissipation pad 500 and the lower plate 100 and allowing them to be fixed in close contact with each other. In this process, the battery cell laminate 200 disposed on the heat dissipation pad 500 may be strongly fixed and may be protected from external impact and vibration. That is, as the battery cell laminate 200 may be disposed on the heat dissipation pad 500, the heat dissipation pad 500 may be deformed to fit the shape of the battery cell laminate 200, the heat dissipation pad 500 may be brought into close contact with the lower plate 100 by vacuum adsorption, and the battery cell laminate 200 may also be fixed together, thereby achieving excellent fixing.

When the battery cell laminate 200 needs to be separated from the lower plate 100 for reuse, etc., the vacuum state may be released by opening the lever portion 322 of the vacuum device 320, and thereby the fixing force that strongly fixes the battery cell laminate 200 is also released, and the adhesiveness with the heat dissipation pad 500 remains so that the battery cell laminate 200 may be easily separated from the heat dissipation pad 500.

Therefore, according to an embodiment, in the cell to pack (CTP) structure in which the battery cell is directly mounted to the lower plate 100 of the battery pack, the battery cell may be excellently fixed, and the battery cell may be separated from the battery pack and may be reused with a simple operation when necessary. By this, the problem of the battery cell being damaged when separated due to being fixed with urethane resin, etc. in the conventional CTP structure, making separation and reuse impossible may be overcome.

The battery pack may be obtained by adding a battery management system (BMS) managing temperature and voltage of the battery pack and a cooling device and packing them.

The battery pack may be applied to various devices. The devices include transport means such as electric bicycles, electric vehicles, and hybrid vehicles, but the present disclosure is not limited thereto, and it may be applied to various devices that use the battery module and the battery pack including the same, which also belongs to the scope of the present disclosure.

In the above, a preferred embodiment of the present disclosure has been shown and described, but the present disclosure is not limited to the specific embodiment described above, and the present disclosure is not only capable of implementing numerous variations by a person of ordinary skill in the technical field to which the disclosure pertains without departing from the gist of the present disclosure claimed in the claimed range, and these variations should not be understood individually from an idea or perspective the present disclosure.

### [Description of symbols]

100: lower plate
110: cell barrier
200: battery cell laminate
210: battery cell
211: pad
310: vacuum adsorbing hole
320: vacuum device
321: adsorption portion
322: lever portion
400: upper pack housing
500: heat dissipation pad

## Claims

1. A battery pack comprising:
a plurality of battery cell laminates each of which includes a plurality of battery cells;
a lower plate on which the plurality of battery cell laminates are arranged;
and
a plurality of heat dissipation pads arranged between the respective battery cell laminates and the lower plate, and contacting the battery cell laminates,
wherein the lower plate includes a plurality of vacuum adsorbing holes arranged corresponding to the respective heat dissipation pads, and
a vacuum device combined to the plurality of vacuum adsorbing holes, and adsorbing the heat dissipation pad on the lower plate by removing air between the lower plate and the heat dissipation pad.

2. The battery pack of claim 1, wherein
the heat dissipation pad is a thermal conductivity pad.

3. The battery pack of claim 1, wherein
when the battery cell laminate is arranged, a portion of the heat dissipation pad contacting the battery cell laminate is deformed correspondingly to a shape of the battery cell laminate.

4. The battery pack of claim 1, wherein
the battery cell laminate is fixed to the lower plate by means of the heat dissipation pad being adsorbed onto the lower plate by the vacuum device.

5. The battery pack of claim 1, wherein
the battery cell laminate is separated from the lower plate by releasing a vacuum adsorption state of the vacuum device.

6. The battery pack of claim 1, wherein
the vacuum device includes an adsorption portion inserted into the vacuum adsorbing hole and inhaling air in the vacuum adsorbing hole, and a lever portion for controlling opening/closing of the adsorption portion.

7. The battery pack of claim 1, wherein
the lower plate is a cooling plate in which a cooling path is formed.

8. The battery pack of claim 1, wherein
the lower plate is a venting plate in which a venting path is formed.

9. The battery pack of claim 1, wherein
the heat dissipation pad has adhesiveness.

10. A device comprising the battery pack according to Claim 1.
